# EUROPEAN PATENT APPLICATION

(11) **EP 1 958 995 A2**
(43) Date of publication of application: **20.08.2008**
(21) Application number: 08250513.2
(22) Date of filing: 12.02.2008
(51) Int. Cl.: C09D 175/04, C08K 3/00

(54) **Aqueous coating, coating film formed from the same, and coated products thereof**

(30) Priority: 14.02.2007 JP 2007033526
(71) Applicant: FUJIKURA KASEI CO., LTD., Itabashi-ku, Tokyo 174-0046 (JP); Toyota Jidosha Kabushiki Kaisha, Toyota-shi, Aichi-ken (JP)
(72) Inventor: Tanaka, Masahiro c/o Fujikura Kasei Co Ltd., Kitakatsushika-gun, Saitama-ken (JP); Nemoto, Tsutomu c/o Fujikura Kasei Co Ltd., Kitakatsushika-gun, Saitama-ken (JP); Sudo, Takahisa c/o Toyota Jidosha K.K., Toyota-shi, Aichi-ken (JP)
(74) Representative: Crowhurst, Charlotte Waveney

(57) **Abstract**

Provided are an aqueous coating which forms a coating film with excellent in adhesion and oil and grease resistance with respect to both hard and soft polyolefin resins, ABS resin and PC resin, and exhibits good scratch resistance and soft feel; a coating film and a coated product obtained therefrom. The aqueous coating is comprised of a binder resin, an inorganic filler, a wetting agent; the binder resin contains a urethane-based resin in a range of 40-80% by mass, chlorinated polyolefin resin in a range of 20-50% by mass; and acrylic-based resin of 0-40% by mass; and the content of the inorganic filler is in a range of 10-12 parts by mass with respect to 100 parts by mass of the binder resin.

## Description

### BACKGROUND OF THE INVENTION

### Field of the Invention

The present invention relates to an aqueous coating, coating film and coated products coated by the aqueous coatings. More specifically, the present invention relates to an aqueous coating which is highly suitable for coating onto base materials made of polyolefin-based resins such as polypropylene, soft-formed polyolefin based thermoplastic elastomers and the like, and coating films and coated products coated with the aqueous coating.

This application claims priority from Japanese Patent Application No. 2007-033526, filed in the Japanese Patent Office on February 14, 2007, the disclosure of which is incorporated herein by reference.

### Description of the Related Art

Automobile interior materials such as instrumental panels, air-bag covers, dash-boards, and the like, are made of hard polypropylene (PP) resin, soft thermoplastic polyolefin-based elastomer (TPO) resin, and soft-formed polyolefin based thermoplastic elastomer (formed TPO) resin, and the like. Coating is normally performed onto the surface of these interior materials. Thereby, high adhesion with respect to both hard and soft polyolefin resins is required. Furthermore, good oil and grease resistance, scratch resistance (resistant to hard objects such as a watch and a ring; the surface is not easily scratched even if these hard objects are contacted thereonto), a soft feel (feeling soft and exhibiting elasticity) is required in coating films.

As a specific example of coatings which can form a coating film exhibiting excellent adhesion with respect to both hard and soft polyolefin resins, Japanese Patent Application, First Publication No. 2005-290314 (Patent document 1) proposes a matt coating composition comprising a binder resin including acrylic-modified chlorinated polypropylene, a urethane resin and a compatibilizer; and urethane resin particles.

Additionally, Japanese Patent Application, First Publication No. 2001-302907 (Patent document 2) proposes a coating including at least a curing agent, and resin composition. The resin composition is produced as follows; first, synthesizing a polyurethane component under the presence of a chlorinated polyolefin component, then subjecting (meth)acrylate monomer and monomer mixture to copolymerization under the presence of the polyurethane component and the chlorinated polyolefin component.

Furthermore, Japanese Patent No. 3436903 (Patent document 3) proposes a coating composition which includes a chlorinated polyolefin-modified resin, a soft resin and soft beads as the essential components.

Additionally, Japanese Patent No. 3346207 (Patent document 4) proposes an aqueous coating which includes an aqueous resin composition comprising resin particles obtained by causing chlorinated polyolefin resin particles dispersed in an aqueous dispersion fluid to swell by means of polymerizable monomers, then polymerizing the polymerizable monomers.

However, these coatings proposed in the Patent documents 1-3 dissolve only in organic solvents, which have low environmental compatibility. Furthermore, scratch resistance and soft feel of coating films obtained from these coatings are insufficient.

Although the coating proposed in the Patent document 4 exhibits good adhesion with respect to hard polypropylene, the adhesion is not necessarily sufficient with respect to a soft formed polyolefin-based thermoplastic elastomer. Furthermore, scratch resistance and soft feel of a coating film obtained therefrom are insufficient.

Furthermore, good adhesion properties with respect to acrylonitrile butadiene styrene resin (hereinafter abbreviated as ABS resin) and polycarbonate resin (hereinafter abbreviated as PC resin) are also desired in coatings.

The present invention was conceived in view of the above-described circumstances and has as its objective the provision of an aqueous coating which forms a coating film with excellent adhesion and oil and grease resistance with respect to both hard and soft polyolefin resins, ABS resin and PC resin, as well as exhibiting good scratch resistance and soft feel; and a coating film and a coated product coated by the aqueous coating.

### SUMMARY OF THE INVENTION

An aqueous coating according to the present invention is an aqueous coating which includes a binder resin, an inorganic filler, a wetting agent wherein the binder resin includes a urethane-based resin in a range of 40-80% by mass, chlorinated polyolefin resin in a range of 20-50% by mass; and acrylic-based resin in a range of 0-40% by mass; and a content of the inorganic filler is 10-12 parts by mass with respect to 100 parts by mass of the binder resin.

The chlorinated value of the chlorinated polyolefin resin utilized for the present invention is preferably less than or equal to 25%, and the molecular weight thereof is preferably more than or equal to 30,000.

The urethane-based resin utilized for the present invention is preferably a polycarbonate-based urethane resin.

Content of the wetting agent utilized for the present invention is preferably in a range of 0.1-3.0% by mass with respect to 100% by mass of the aqueous coating.

Additionally, a film elongation of a coating film coated onto a base material then dried is preferably in a range of 30-300%, a break strength thereof is preferably more than or equal to 200N/cm² at 23°C.

Furthermore, the coating film of the present invention is preferably formed from the aqueous coating, and a coated product of the present invention is preferably formed by coating the coating film coated onto a base material made of polyolefin-based resin.

According to the present invention, an aqueous coating which forms a coating film with excellent adhesion, and oil and grease resistance with respect to both hard and soft polyolefin resins, ABS resins, PC resins, as well as exhibiting good scratch resistance and soft feel can be formed, offering a coating film and a coated product with exceptional properties above.

### DETAILED DESCRIPTION OF THE INVENTION

Below, the present invention will be explained in detail. The aqueous coating of the present invention includes a binder resin, an inorganic filler, and a wetting agent. Binder resin

The binder resin according to the present invention includes 40 to 80% by mass of urethane-based resin, 20 to 50% by mass of chlorinated polyolefin resin and 0 to 40% by mass of acrylic-based resin.

Examples of the urethane resin include polycarbonate-based urethane resin, polyester-based urethane resin, polyether-based urethane resin, acrylic-based urethane resin, and the like. These urethane resins are preferred in a view of adhesiveness and scratch resistance, and the polycarbonate-based urethane resin is most preferred among them. Employing emulsion of these resins is further preferred from an environmental aspect.

Film elongation and break strength differs by types of resins, but a preferred extensibility is in a range of 300 to 800% and a preferred break strength is more than or equal to 2000 N/cm². When the extensibility and break strength are in the range above, a coating film formed when these resins are used as aqueous coatings, the surface becomes smoother providing with an expensive-looking. Furthermore, the coating film offers good scratch resistance, hence coating onto, for example, instrumental panel of automobiles can be elaborately-designed.

The above-mentioned urethane-based resin content should be used in an amount such that the proportion of the urethane-based resin is in the range of 40-80% by mass, more preferably 50-70% by mass, and the most preferred urethane-based resin content is in the range of 60-70% by mass with respect to 100% by mass of the binder resin. If the content is less than the lower limits above, the scratch resistance and soft feel decrease. In contrast, if the content exceeds the upper limits above, the adhesion with respect to polyolefin resin is degraded.

Chlorinated polyolefin resin exhibits high adhesion with respect to polyolefin-based resins such as polypropylene resin (hereinafter abbreviated as PP resin) and formed polyolefin-based thermoplastic elastomer (hereinafter abbreviated as formed TPO). Therefore, an aqueous coating of 1-component with a high adhesiveness can be achieved by employing the chlorinated polyolefin resin as a binder resin. Furthermore, pretreatment, such as promoter treatment, and the like is no longer be required and coating can be performed in one coating (in one coat finished). Hence an aqueous coating of 1-component 1-coat-type can be obtained.

Chlorinated value of the chlorinated polyolefin resin is preferred to be less than or equal to 25%, more preferably in a range of 10-23%, and the most preferred chlorinated value is in a range of 15-22%. If the chlorinated value exceeds the upper limit above, the adhesion with respect to polyolefin resin is degraded. Furthermore, the molecular weight of the above-mentioned chlorinated polyolefin resin is preferred to be equal or greater than 30,000, more preferably in a range of 50000-200000, and the most preferred molecular weight is in a range of 50000-100000. If a lower limit of molecular weight of the chlorinated polyolefin resin becomes less than the lower limit of the molecular weight above, the scratch resistance, oil and grease resistance degrade.

Examples of chlorinated polyolefin resins may be listed such as chlorinated polypropylene resin, chlorinated polyethylene resin, chlorinated polypropylene- ethylene copolymer resin, chlorinated polyethylene-acrylic copolymer resin, and the like. Among the chlorinated polyolefin resins mentioned above, chlorinated polypropylene resins are preferred.

Furthermore, emulsified chlorinated polyolefin resins may be more preferred in a view of environmental aspects.

The above-mentioned chlorinated polyolefin resin content should be used in an amount such that the proportion of the chlorinated polyolefin resin is in the range of 20-50% by mass, more preferably 25-40% by mass, and the most preferred content is in a range of 30-40% by mass with respect to 100% by mass of the binder resin. If the content is less than the lower limits above, the adhesion with respect to polyolefin resins is decreased. In contrast, if the content exceeds the upper limits above, scratch resistance and soft feel degrade.

As examples of acrylic-based resins, there are copolymers of alkyl (meth)acrylates ester, such as methyl(meth)acrylate, ethy(meth)acrylate, butyl(meth)acrylate, 2-ethylhexyl(meth)acrylate, cyclohexyl(meth)acrylate, lauryl(meth)acrylate, stearyl(meth)acrylate, (meth)acrylic acids, and the like, which can be used either singly or may be polymerized with other polymerizable monomers absorbed into these acrylic monomers. The other polymerizable monomers which can be polymerized with the above acrylic monomers are such as maleic acid, phthalic acid, itaconic acid, vinyl acetate, styrene, and the like. Furthermore, emulsifications of these monomers may be more preferred in a view of environmental aspects.

The scratch resistance is further improved by including acrylic monomers in the binder resins.

The above-mentioned acrylic-based resin should be used in an amount such that the proportion of the acrylic-based resins is in the range of 0-40% by mass, more preferably 10-30% by mass, and the most preferred content is in the range of 10-20% by mass with respect to 100% by mass of the binder resin. If the proportion of acrylic resin content exceeds the upper limits of above, the adhesion with respect to polyolefin resins and soft feel is degraded.

### Inorganic filler

It is possible to achieve a 1-component aqueous coating with high adhesiveness by including inorganic fillers.

The inorganic fillers that may be used are extender pigments, color pigments, photoluminescent pigments, silica and the like. The extender pigments are preferred among the fillers listed above.

The extender pigments used in the present invention are not limited thereto; any types of extender pigments which are generally employed in coating may be used, such as calcium carbonate, calcium sulfate, talc clay, barium sulfate, silicon oxide, bentonite, magnesium carbonate, barium carbonate, diatomite, and the like. Calcium carbonate is preferred due to its availability.

The above-mentioned inorganic fillers should be used in an amount such that the proportion of the inorganic fillers is in the range of 10-120 parts by mass, more preferably 20-100 parts by mass, and the most preferred content is in a range of 30-80 parts by mass with respect to 100 parts by mass of a solid content of the binder resin. If the proportion of inorganic fillers is less than the lower limit above, the adhesion with respect to PP resins is decreased, whereas when exceeding the proportion of inorganic fillers to the upper limits above, the scratch resistance decreases.

### Wetting agents

Wettability of the aqueous coating is improved by including wetting agents, thereby it is possible to reduce contact angle between base materials made of olefin-based resin, ABS resin, PC resin, and the like.

As the contact angle becomes smaller, adhesion of the aqueous coating to the base materials is improved, as well as it becoming more likely to obtain a uniform coating film; resulting in improved scratch resistance and soft feel. In addition, the oil and grease resistance is also improved by increasing the adhesive properties.

The types of wetting agents used in the present invention are not limited thereto; any types of wetting agents which are generally employed in coatings may be used, such as anionic surfactants, cationic surfactants, nonionic surfactants, silicone surfactants, fluorochemical surfactants, and the like.

The above-mentioned wetting agents should be used in an amount such that the proportion of the wetting agents is in the range of 0.1-3.0% by mass, more preferably 0.2-1.5% by mass, and the most preferred content is in a range of 0.5-1.2% by mass with respect to 100% by mass of aqueous coating. If the content of wetting agents is less than the lower limit above, the wettability decreases, and the adhesion with respect to base materials and smoothness of a coating film surface is degraded due to decreasing the wettability. Consequently, the scratch resistance and soft feel also decrease. Meanwhile, when the content of wetting agents exceeds the upper limits above, the adhesion with respect to polyolefin resins is degraded.

### Other additives

The aqueous coating of the present invention may include other additives such as resin particles, co-solvents, coloring agents for color development, and the like, if necessary in suitable amounts.

Acrylic resin beads, urethane resin beads and the like may be used as the resin particles. In particular, MR-7G (Soken Chemical & Engineering Co., Ltd.) and 'Art Pearl' (Negami Chemical industrial Co., Ltd) are examples of acrylic resin beads and urethane resin beads, respectively, which can be used either singly or in mixtures of two or more types. The soft feel of a coating film are further improved by including those resin particles in an aqueous coating.

The above-mentioned resin particles should be used in an amount such that the proportion of the resin particles is in the range of 0-100% by mass, more preferably 10-70% by mass, and the most preferred content is in a range of 10-50% by mass with respect to 100% by weight of the solid content of the binder resin. If the proportion of the resin particles content exceeds the upper limit of above, the adhesion with respect to polyolefin resins is degraded.

Examples of co-solvents include methyl cellosolve, carbitol, triethyleneglycol, Texanol, and the like, which can be used either singly or in mixtures of two or more types.

The above-mentioned co-solvents should be used in an amount such that the proportion of the co-solvents is in the range of 0.1-10% by mass, more preferably 1-8% by mass, and the most preferred content is in a range of 2-7% by mass with respect to 100% by weight of aqueous coating. If the content of the co-solvents is less than the lower limit of above, it may be difficult to form a uniform coating film, resulting in a decrease of the adhesion with respect to base materials, degrading scratch resistance and soft feel. On the other hand, if the content of the co-solvents exceeds the upper limit above, emulsified particles become unstable when an emulsified resin is employed, and deterioration of storage stability and gelification of resin may occur.

As for the coloring agents, any coloring agents used in normal coatings such as organic or inorganic pigments may be used.

As for additives, any additives used in normal coatings such as matte coatings, anti-freezing agents, ultraviolet absorbents, optical stabilizers, seaweedproofing agents, fungicides, preservatives, thickeners, deforming agents can be included if necessary.

### Aqueous coating

The aqueous coating according to the present invention is obtained by mixing the inorganic fillers and the wetting agents described above with the binder resin described above, and further agitating after adding water and other components thereinto if necessary.

The above-mentioned water content should be used in an amount such that the proportion of the water content is in the range of 30-80% by mass, more preferably 40-70% by mass, and the most preferred content is in a range of 40-60% by mass with respect to 100% by mass of the aqueous coating.

By coating and drying the aqueous coating onto base materials, a coating film with excellent adhesiveness and oil and grease resistance, and improved scratch resistance and soft feel can be obtained.

A contact angle between the aqueous coating and base materials is preferred to be less than or equal to 40°, more preferably in the range of 30-38°. Contact angle is a quantitative measure of the wetting of a solid by a liquid. It is the angle formed by the liquid when the liquid is dropped onto a solid material; in other words, at the three-phase boundary where a liquid, gas (or a second immiscible liquid) and solid intersect. As the contact angle becomes smaller, spread of a liquid onto a solid surface tends to be wider; hence adhesiveness of the liquid onto the solid surface is improved. In contrast, when the contact angle becomes greater, a liquid tends to form into drops with advanced edges on a solid surface, hence adhesiveness of the liquid onto the solid surface will decrease. If the contact angle between the aqueous coating and base materials exceeds the angle described above, the aqueous coating coated onto the base materials tends to form into a drop, resulting in a decrease of the adhesion with respect to base materials. As a result, formation of a uniform coating film formation tends to become difficult.

A film elongation at 23 °C of a coating film formed in the present invention is preferred to be in a range from 30-300%, more preferred to be in a range of 50-250%, and the most preferred film elongation is in a range of 50-200%. If the film elongation is in the range above, the soft feel is improved.

Here, if only the soft feel of a coating film increase (in other words, soft and flexible), the scratch resistance will become insufficient. Thus, the break strength of coating film at 23°C is preferred to be greater or equal to 200N/cm², more preferred to be in a range of 300-1500 N/cm² and the most preferred break strength is in a range of 400-1000 N/cm². If the break strength is in the above range, the scratch resistance is improved.

Therefore, by controlling the film elongation and the break strength of the coating film, the coating film having excellent scratch resistance and soft feel can be obtained.

The thickness of a coating film formed on a base material is not limited thereto; however, a normal thickness should be in a range from 15-40µm. If the thickness is thinner than the above range, the break strength decreases. Consequently, adhesion between the coating film and the base material, and oil and grease resistance tend to deteriorate. In contrast, if the thickness exceeds the above range, cost increases. Furthermore there is also a possibility of sagging of a coating film when a coating is applied to a base material at an upright position.

Examples of types of base materials in which a coating film is formed thereonto are polyolefin-based resins such as PP resin, formed TPO resin, TPO resin, and the like. However, the material is not limited thereto; other resins (such as ABS resin or PS resin), metals, woods, and the like may be employed.

Furthermore, examples of products to be coated with the aqueous coating of the present invention are preferred to be resin-derived products such as instrumental panels, air-bag covers, dashboards of automobiles, and the like. However the products are not limited thereto; various metals or wooden products may be used. Resultant coated products which are obtained by coating the aqueous coating of the present invention can form a coating film excellent in oil and grease resistance, scratch resistance and soft feel. Coating methods of the aqueous coating are not limited thereto; any conventional methods may be employed, such as brushing, spraying, dipping, and the like.

As described above, the aqueous coating of the present invention has improved scratch resistance and soft feel since the binder resin includes urethane-based resin. Further, since the binder resin includes chlorinated polyolefin resin, exceptional adhesion can be offered, in particular, with respect to both hard PP resin and soft formed TPO resin. Furthermore, pretreatments of base materials, a primer treatment, or the like will no longer be required upon coating; hence coating can be performed in one coating. Furthermore, a curing agent for curing the coating film will no longer be required, offering a 1-component 1-coat-type aqueous coating.

Furthermore, by virtue of including the inorganic fillers in the aqueous coating, the adhesion with respect to, in particular, PP resin can be improved. Furthermore, by virtue of including the wetting agents, the contact angle between the base materials and the aqueous coating will become small. Consequently, the adhesion with respect to the base materials improves and it becomes easier to form a uniform coating film upon coating onto the base materials. In addition, when the resin particles are included, the soft feel of the coating film are particularly improved.

Therefore, the aqueous coating of the present invention is suitable for coating onto interior materials of automobiles which are likely to receive external damage or to become dirty, and such damages and dirt are easily observed. In particular, it is more suitable to coat onto base materials in which the resin is made of different compositions integrated thereinto. The resin with a mixed composition is often used in instrumental panels, air-bag covers, and the like.

### Examples

Hereinafter, the present invention will be explained in detail through examples, but the following are merely examples which do not restrict the present invention. The amounts of the components in the following examples are indicated in 'part' which refers to 'part by mass' or '%' which refers to '% by mass'.
Compositions used in Examples are shown below:
Urethane-based resins: polycarbonate-based urethane resin 'Takelac WS', Mitsui Chemicals Polyurethanes Inc., film elongation 450%, break strength 5700N/cm².
Chlorinated polyolefin (PO) resins: chlorinated polyolefin resin `Superchlon E-503', Nippon Paper Chemicals Co., Ltd, chlorinated value 20%, molecular weight 60,000.
Acrylic-based resins: 'NeoCrylA-2091', DSM Neo Resins Inc.
Inorganic fillers: extender pigment `Talc LMR-100' , Fuji Talc Industrial Co. Ltd.
Wetting agents: 'Polyflow KL 245', Kyoeisha Chemical Co., Ltd.
Resin particles: Acrylic resin beads 'MR-7G', Soken Chemical & Engineering Co., Ltd.
Co-solvents: 'Texanol', Eastman Chemical Japan Ltd.

### Example 1

### Preparation of Aqueous Coating

An aqueous coating was prepared by mixing a wetting agent, a film forming aid and water in the amounts shown in Table 1, which were the amounts in 20 parts of an inorganic filler and 100% by mass of the aqueous coating, with respect to 100 parts of a binder resin consisting of 70% of urethane-based resin and 30% of chlorinated PO resin. Measurement of Film Elongation and Break Strength

The obtained aqueous coating was coated onto an exfoliate paper and a coating film of 100-150µm thickness was formed. The coating film was left at 23°C for 48 hours, then a portion of the film, with the size of 10cm×1cm, to be subj ected to measurement was cut out therefrom. The cut portion was further left for five hours at 23°C, then the film elongation and the break strength were measured using TENSILON universal tester (RTC-1210, Orientec Co., Ltd.). The results are shown in Table 1.

### Evaluation

The following properties of the coating film were evaluated with the methods described below. The results are shown in Table 1.

### Adhesion

The aqueous coating was coated onto base materials so as to form a coating film of 20-30µm thickness. The base materials were made of the following resins: PP resin (Mitsui Chemical Co., Inc.), formed TPO resin (Kaneka Co., Inc.), ABS resin (Nippon A & L Co., Inc.), PC resin (Sumitomo Dow Co., Inc.).

After leaving the coating films for 48 hours at 23°C, the surface of the films was cut using a cutter so as to make grids of 100 cells spaced by 1 mm intervals. A cellophane adhesive tape was applied over these cells, and then was peeled away in a 180 degree direction. This adhesion and peeling test was repeated at the same spot three times, after which the state of adhesion to the coating film was evaluated by eye.
○ : Excellent (Absolutely no peeling on any cells on the grids)
Δ: Fair (a corner or a spot is peeled on some cells on the grids)
× : Bad (more than one peeled cell on the grids)

### Oil and grease resistance

The aqueous coating was coated onto base materials in which each thereof was made of the following resins: PP resin, formed TPO resin, ABS resin, PC resin, so as to form a coating film of 20-30µm thickness. After leaving the coating films for 48 hours at 23°C, a beef tallow (Nacalai Tesque Co., Inc.: chemical grade beef tallow) was coated onto the surface of the coating film with 2g/100cm² of the area of the coating film surface. The beef tallow was removed after leaving on the film surface for seven days in an 80°C atmosphere. The surface of the film was cut using a cutter so as to make grids of 100 cells spaced by 1 mm intervals. A cellophane adhesive tape was applied over these cells, then was peeled away in a 180 degree direction. This adhesion and peeling test was repeated at the same spot three times, after which the state of adhesion to the coating film was evaluated by eye.
○ : Excellent (Absolutely no peeling on any cells on the grids)
Δ: Fair (a corner or a spot is peeled on some cells on the grids)
× : Bad (more than one peeled cell on the grids)

### Scratch resistance

The aqueous coating was coated onto the base material made of PP resin so as to form a coating film of 20-30µm thickness. The coating film obtained was measured with a Scratch Hardness Tester (Tester Sangyo Co., Inc.) in order to evaluate with the following two-rank criteria of whether or not the coating film is cracked and the surface of the base material is exposed.
○ : Surface of the base material is not exposed
×: Surface of the base material is exposed

### Soft feel

The aqueous coating was coated onto the base material made of PP resin so as to form a coating film of 20-30µm thickness. The feel of the formed coating film by hand was evaluated with the following two-rank criteria.
○: Elasticity is felt in the coating film, and fingers move smoothly
× : Elasticity is not felt in the coating film, or even if elasticity is felt, fingers do not move smoothly

### Examples 2-5 and Comparative Examples 1-5

As shown in Table 1, aqueous coatings for Examples 2-5 and Comparative Examples 1-5 were prepared by the same methods described in Example 1, except for changing the composition of the compounds added. Then similarly to Example 1, each measurement and evaluation was performed on the formed coating films. The results are shown in Table 1.

**[Table 1]**

| Content / Composition | | | | Example | | | | | Comparative Example | | | | | |
|---|---|---|---|---|---|---|---|---|---|---|---|---|---|---|
| | | | | 1 | 2 | 3 | 4 | 5 | 1 | 2 | 3 | 4 | 5 | 6 |
| Content in a binder resin 100% by mass (% by mass) | | | Urethane-based resin | 70 | 60 | 60 | 60 | 60 | 70 | 85 | 70 | 5 | 60 | 20 |
| | | | Chlorinated PO resin | 30 | 40 | 40 | 30 | 40 | 30 | 15 | 30 | 25 | 40 | 80 |
| | | | Acrylic-based resin | | | | 10 | | | | | 70 | | |
| Content with respect to 100 parts by mass of a binder resin (parts by mass) | | | Inorganic fillers | 20 | 20 | 100 | 100 | 50 | 0 | 20 | 100 | 100 | 150 | 100 |
| | | | Resin panicles | | | | | 10 | | | | | | |
| Content in an aqueous coating 100% by mass (% by mass) | | | Wetting agents | 1 | 1 | 1 | 1 | 1 | 1 | 1 | 0 | 1 | 1 | 1 |
| | | | Co-solvents | 6 | 6 | 6 | 6 | 6 | 6 | 6 | 6 | 6 | 6 | 6 |
| | | | Water | 45 | 45 | 60 | 60 | 50 | 40 | 45 | 60 | 60 | 60 | 60 |
| Coating film | Film elongation (%) | | | 130 | 125 | 75 | 60 | 100 | 200 | 200 | 160 | 10 | 30 | 60 |
| | Break strength (N/cm²) | | | 600 | 500 | 400 | 650 | 450 | 900 | 600 | 90 | 1400 | 150 | 150 |
| | Adhesion | PP resin | | ○ | ○ | ○ | ○ | ○ | × | × | Δ | ○ | ○ | ○ |
| | | Formed TPO resin | | ○ | ○ | ○ | ○ | ○ | ○ | Δ | × | × | ○ | ○ |
| | | ABS resin | | ○ | ○ | ○ | ○ | ○ | ○ | ○ | ○ | ○ | ○ | ○ |
| | | PC resin | | ○ | ○ | ○ | ○ | ○ | ○ | ○ | Δ | ○ | ○ | ○ |
| | Oil and grease resistance | PP resin | | ○ | ○ | ○ | ○ | ○ | × | × | × | ○ | ○ | × |
| | | Formed TPO resin | | ○ | ○ | ○ | ○ | ○ | ○ | × | × | × | ○ | × |
| | | ABS resin | | ○ | ○ | ○ | ○ | ○ | ○ | ○ | ○ | ○ | ○ | ○ |
| | | PC resin | | ○ | ○ | ○ | ○ | ○ | ○ | ○ | × | ○ | ○ | ○ |
| | Scratch resistance | | | ○ | ○ | ○ | ○ | ○ | ○ | ○ | × | ○ | × | × |
| | Soft feel | | | ○ | ○ | ○ | ○ | ○ | ○ | ○ | × | × | ○ | × |

As is clear from the results shown in Table 1, all the aqueous coatings obtained in Examples exhibited good adhesion and oil and grease resistance with respect to various base materials made of PP resin, formed TPO resin, ABS resin and PC resin. Furthermore, the formed coating films had good scratch resistance and soft feel. Since these coating films were excellent in adhesion, and oil and grease resistance with respect to various base materials, good adhesiveness is expected from the corresponding coatings.

In contrast, since the aqueous coating of Comparative Example 1 did not include the inorganic fillers, the coating film formed onto the base material made of PP resin was poor in adhesion and oil and grease resistance, compared to those observed in Examples.

The aqueous coating of Comparative Example 2 contained less chlorinated PO resin in the binder resin. Thereby the coating film formed onto the base materials made of PP resin and formed TPO resin exhibited poor adhesion and oil and grease resistance, compared to those observed in Examples.

The aqueous coating of Comparative Example 3 did not contain the wetting agents, hence the coating films formed onto the base materials, each made of PP resin, formed TPO resin and PP resin were not uniform nor smooth, exhibiting poor adhesion and oil and grease resistance, compared to those observed in Examples.

In addition, the break strength of the coating film formed from the coating of Comparative Example 3 was small, exhibiting insufficient scratch resistance and soft feel.

The aqueous coating of Comparative Example 4 contained less urethane-based resin and more acrylic-based resin in the binder resin. Thereby, the coating film formed onto the formed TPO resin exhibited poor adhesion and oil and grease resistance, compared to those observed in Examples. In addition, the film elongation of the coating film was small and the soft feel was insufficient.

Since the aqueous coating of Comparative Example 5 contained more inorganic fillers, it exhibited good soft feel. However, the break strength was small exhibiting insufficient scratch resistance.

Since the aqueous coating of Comparative Example 6 contained more chlorinated PO resin in the binder resin, the coating film formed on the base materials made of PP resin and formed TPO resin exhibited poor oil and grease resistance compared to those observed in Examples. In addition, the break strength was small exhibiting insufficient scratch resistance and soft feel.

As is clear from the results described above, the aqueous coating according to the present invention exhibits excellent adhesion with respect to both hard polyolefin resins (PP resin) and soft polyolefin resins (formed TPO resin).

In particular, the coating film formed from the aqueous coating exhibits excellent adhesion and oil and grease resistance with respect to PP resin and formed TOP resin. The coating film also had exceptional properties with scratch resistance and soft feel.

Furthermore, the aqueous coating according to the present invention also exhibits good adhesion with respect to ABS resin and PC resin, similarly to PP resin and formed TPO resin. The coating film formed from the aqueous coating of the present invention is further provided with excellent adhesion and oil and grease resistance, and good scratch resistance and soft feel.

## Claims

1. An aqueous coating comprising a binder resin, an inorganic filler, and a wetting agent;
**characterized in that** the binder resin contains a urethane-based resin in a range of 40-80% by mass, chlorinated polyolefin resin in a range of 20-50% by mass; and acrylic-based resin of 0-40% by mass; and
the content of the inorganic filler is in a range of 10-12 parts by mass with respect to 100 parts by mass of the binder resin.

2. The aqueous coating according to claim 1, wherein chlorinated value of the chlorinated polyolefin resin is less than or equal to 25%, and the molecular weight is more than or equal to 30,000.

3. The aqueous coating according to claim 1 or 2, wherein the urethane-based resin is a polycarbonate-based urethane resin.

4. The aqueous coating according to any one of claims 1 to 3, wherein the content of the wetting agent is in a range of 0.1-3.0% by mass with respect to 100% by mass of the aqueous coating.

5. The aqueous coating according to any one of claims 1 to 4, wherein a film elongation of a coating film which is coated onto a base material then dried is in a range of 30-300%, a break strength thereof is more than or equal to 200N/cm² at 23°C.

6. The aqueous coating according to any one of claims 1 to 5, wherein a coating film is formed from the aqueous coating,

7. The coating film according to claim 6, wherein a base material of a coated product is made ofpolyolefin-based resin.
